# EUROPEAN PATENT SPECIFICATION

(11) **EP 1 811 161 B1**
(45) Date of publication and mention of the grant of the patent: **16.07.2008**
(21) Application number: 06100708.4
(22) Date of filing: 23.01.2006
(51) Int. Cl.: F02D 41/22, F02D 41/00

(54) **Method of diagnosing the operation of a cam profile shifting system.**
Verfahren zur Diagnose des Betriebs eines Nockenprofil-Umschaltsystems
Procédé de diagnostic du fonctionnement d'un système du changement du profil de came

(43) Date of publication of application: 25.07.2007
(73) Proprietor: Ford Global Technologies, LLC, Dearborn, MI 48126 (US)
(72) Inventor: Möller, Peter, SE-431 68, MÖLNDAL (SE); Svenske, Erik, SE-412 72, GÖTEBORG (SE)
(74) Representative: Ekström, Nils

(56) References cited:
- EP-A- 1 143 117
- EP-A- 1 460 254
- EP-A- 1 580 407
- DE-A1- 10 235 665
- US-A- 6 021 758

## Description

### TECHNICAL FIELD

The invention relates to a method of diagnosing the operation of a cam profile shifting system for a combustion engine including a set of combustion chambers, each being provided with at least one intake valve and a cam mechanism acting on each intake valve, said cam mechanism having at least two separate cam profiles with different shapes and being controlled to selectably engage one of said cam profiles for controlling the position of the intake valve. In particular the invention relates to a method of diagnosing the operation of a cam profile shifting system according to the preamble of claim 1, where the diagnose is based on including the steps of:
a) detecting an engine parameter (dP/dϕ,dn/dϕ) having a cyclic behaviour with respect to the angular position of a crank shaft arranged in the engine and which parameter (dP/dϕ,dn/dϕ) is a function of the volumetric efficiency (η) of the cylinder depletion;
b) collecting a set of samples (xᵢ) of said engine parameter (dP/dϕ,dn/dϕ) during at least one engine cycle including a combustion event for each cylinder in said set of combustion chambers;
c) calculating the weight coefficients (W(1)) for a trigonometric base function F₁ including the trigonometrical function of the 1 st order (cos(2π/ω)ϕ + jsin(2π/ω)ϕ) of the engine cycle (ω), in the crank angle domain [ϕ:0 - w].
d) comparing the weight coefficients (W(1)) with threshold values (T₁).

### BACKGROUND ART

Cam Profile Switching (CPS) technology has significant effect on drivability, exhaust emissions and fuel consumption. Legislative requirements for the exhaust gas emissions regulations imposed recently by the State of California and the Environmental Protection Agency demand the ability to conduct a continuous monitoring of the state of CPS (Cam Profile Switching System). This, in its turn, requires having an effective diagnostic method for identification of the system failure. The valve lift event can not be directly measured and special diagnostic algorithms, based on indirect information about the valve lift, are required to identify a failure in the system.

Several methods which allow detecting the CPS state are known. The first one is based on the difference in the air charge inducted in the cylinders for different lifts. The inducted air charge measured by Manifold Air Flow (MAF) sensor is compared with the air charge model based on the measured position of the throttle flap, intake manifold pressure and engine speed. The CPS state is associated with the error between measured and modelled air charge, US 6213 068. The drawback of the method described in US 6213 068 is that the method does not allow the cylinder individual failure detection. It is furthermore not suitable for the detection of the failure of a one bank either due to the relatively small difference in volumetric efficiency for the case of a single Bank failure.

Another method is based on the combustion state monitoring using fluctuations of the engine speed. The method is based on the fact that the combustion state changes considerably during shifting, US 6 006 152. The invention uses the technique of the combustion state monitoring via irregularities of the engine speed. Irregularities are associated with the CPS state. The method allows the cylinder individual failure detection. The method uses the torque estimation technique which is well known in the literature devoted to the combustion efficiency monitoring functions.

Another group of methods proposes to associate the CPS state with the fluctuations of the intake manifold pressure signal. The closest invention which proposes to recover the intake valve timing information from the pressure signal is disclosed in the US 5495830. The method for control and monitoring of the check valves is described in US 5495830. Intake valve closing events which are determined via the pressure change allow to estimate an amount of the backflow into the intake runner where the check valve is controlled to minimize the backflow effect. To realize the algorithms proposed in the US 5495830 the pressure sensor is required in every intake passage which increases the cost of the system.

Moreover, the solution is dedicated to the check valve control and monitoring only. In the present invention we propose to associate the irregularities in the intake manifold pressure signal measured by a single pressure sensor installed in the intake manifold with the CPS state. The method allows the detection of the failure of one bank with one parameter to be calibrated only. Since the method is based on the intake manifold pressure pulsations which come from the intake event the detection method does not depend and therefore is robust with respect to problems in the ignition and fuelling systems.

Furthermore EP1580407 relates to a method for detection failure in a cam profile switching system arranged at an internal combustion engine provided with an even number of cylinders constituting two separate groups of cylinders, a first switching means responsible for performing cam profile switching on the first group of cylinders and a second switching means responsible for performing cam profile switching on the second group of cylinders, said method including the steps of: arranging an ignition sequence such that ignitions in the individual cylinders of the first group sequentially follows after each other without interjacent ignitions in the second group and that ignitions in the individual cylinders of the second group sequentially follows after each other without interjacent ignitions in the first group,
detecting a combustion related signal,
determining a component of the detected combustion related signal which has engine cycle periodicity, and
determining the amplitude value of said component, wherein
a failure in the cam profile switching system is detected in the event said amplitude exceeds a threshold value.

Even though the method disclosed therein gives reliable results, the method is restricted to detection of faults in a system where ignition sequence is arranged such that ignitions in the individual cylinders of the first group sequentially follows after each other without interjacent ignitions. Furthermore the method requires substantial calibration since the amplitude is decided by forming the difference between maximal and minimal values of the signal.

### DISCLOSURE OF INVENTION

The object of the invention is to provide a method for diagnosing the operation of a cam profile shifting system for a combustion engine, which method requires less calibration, and which method may be used also in systems in which the ignition sequence is not coordinated with switching means such that it is not necessary to group the switching of cam profiles into two groups where the cylinders associated with each group are arranged in ignition order.

This object is achieved by a method of diagnosing the operation of a cam profile shifting system for a combustion engine according to the characterising portion of claim 1. By including the step of forming the product of the sampled value xᵢ and the value of the base function F₁ at the sampled crank angle (ϕ) when calculating the weight coefficient (W(1)) for the base function F₁ a straightforward operation that does not require calibration is obtained. The base function of the first order has a weight coefficient of a magnitude > 0 in the event the engine parameter that is measured contains a periodic oscillation with the periodicity equal to an engine cycle ω. If for instance one valve is not shifted correctly a local variation of the engine parameter having a periodicity of Nω, where N is equal to the number of combustions in an engine cycle will occur once during an engine cycle. Hence the base function of the first order will contain energy and the weight coefficient W(1) will have a magnitude > 0.

In a first preferred embodiment of the invention step c) of the method to which the invention relates to furthermore includes the step of calculating the weight coefficients (W(k)) for a set of trigonometric base functions Fₖ including the trigonometrical function of the Nth order (cosN(2π/Ω)ω)ϕ + jsinN(2π/ω)ϕ) of the engine cycle (ω), where N is the number of combustion chambers, with a frequency corresponding to the combustion frequency (ω/N) in the crank angle domain [ϕ:0 - ω] and at least another trigonometrical function (cosM(2π/ω)ϕ + jsinM(2π/ω)ϕ) of lower order (M:M<N) than said Nth order trigonometrical function and the step d) comparing the weight coefficients (W(k)) includes the steps of comparing the weight coefficients (W(k)) for said base functions Fₖ with respective threshold values (Tₖ) and concluding that the position of all intake valves are not controlled by cam profiles of the same shape in the event the weight coefficients for the base functions Fₖ for any of the base functions Fₖ other that the Nth order (k≠N) is above a threshold value (Tₖ) or the weight coefficient (W(N)) of the Nth order is below a threshold value (T_{N}).The threshold values (Tₖ) may depend on the operating condition, such as the engine speed.

By the use of a method according to the first preferred embodiment it is possible to separate between different types of patterns of cam profile engagements. If for instance the valves of half of the cylinders are actuated by a first cam profile and the other half of the cylinders are actuated by a second different cam profile, the engine parameter having a general periodicity of Nω, will also contain component having a period of ω in the event combustions in the cylinders related to the first cam profile occur sequently after each other. In the event the first and second profile engages in groups of two in the ignition sequence the base function of the order N/2 will be excited. Furthermore it is possible to detect that all intake valves are not controlled by the same cam profile in the event the weight coefficient (W(N)) of the Nth order is below a threshold value (T_{N}). It is assumed that if all valves are engaged by the same cam profiles, the Nth order of the base function is the completely dominating order in the frequency spectra. In the event further orders of the base function are excited to various degrees, the dominance of the Nth order is reduced. If the weight functions are compared in size with each other, the weight function for the Nth order will be reduced in the event order base function are excited. Hence, the weight function of the Nth order will drop below a threshold value in the event some of the valves are controlled by cams having a different profile than the remaining cams.

In a preferred embodiment of the invention the use of a Direct Fourier transform is contemplated in order to establish the values of the weight functions.

In a particularly preferred embodiment the ignition and cam mechanism are coordinated such that control of the cam mechanisms for a set of combustion chambers are performed by two actuators, each being responsible for the cam profile shift for a group of combustion chambers consisting of half of the combustion chambers in the set and where the combustion chambers in each group consists of those combustion chambers whose ignition sequently follows each other in order such that the ignition for all cylinders is completed in one group before ignition in the other group is started. The suggested coordination facilitates the detection of a group being controlled by a different shape than the other group since the first order base function will have a relatively large weight coefficient in this situation. According to this embodiment it is concluded that the intake valves of one group are controlled by a cam having a different shape than the intake valves of the other group in the event the weight coefficient of the base of the first order is above a threshold value.

It is advantageous to use base functions including the trigonometrical functions with the following periods: ω/X, for all even denominators X of the number of combustion chambers N. Such a set of base function includes all detectable situations which may result from individual cylinder being controlled by a different cam profile from the remaining cylinders.

The frequency or frequencies of the base functions other than the base function of the Nth order having a weight coefficient above a corresponding threshold value may be used to determine the permutation in an engine cycle of the relative position of the intake valves whose position are controlled by cam profiles having a different shape in relation to the remaining intake valves. For example, in the event H denotes a high cam profile and L a low cam profile, it may be noted that the permutation LLLLHHHH would give rise to a excitation of the base function with the period ω, while the permutation LHLHLHLH would give rise to a excitation of the base function of frequency 4ω, and furthermore the permutation LLHHLLHH would give rise to a excitation of the base function with the period ω/2. From knowledge of which base functions are excited, that is which base functions has a weight coefficient above certain threshold values, it is possible to determine the permutation in an engine cycle of the relative position of the intake valves whose position are controlled by cam profiles having a different shape in relation to the remaining intake valves.

Advantageously the phase angle or angles of the base functions other than the base function of the Nth order having a weight coefficient above a corresponding threshold value may be used to determine the actual position in an engine cycle the intake valves whose position are controlled by cam profiles having a different shape in relation to the remaining intake valves. Using the form of denoting high and low profiles indicated above it is understood that LLLHLLLL, LHLLLLLL, LLLLLLHL all would excite the first order of the base function. The phase angle in relation to the engine cycle of the three different examples will however be different. The phase angle will be dependent on in which order the different cam profiles arrive. The phase angle positions a periodic base function in relation to the engine cycle [ϕ:0 - ω ].

Preferably, the engine parameter that is measured is constituted by an intake manifold pressure. When establishing which intake valves are controlled by cam profiles of different shape from the remaining cam profiles, the phase angle is used. In this case the phase angle is dependent on the position in the combustion sequence of the valve being controlled by a different shape and furthermore of the propagation time from the effect on pressure created by the specific valve at the valve seat until the disturbance has travelled up to the position of a pressure sensor measuring the pressure. This propagation time is dependent on the velocity of sound in the intake of the engine and is thus dependent on the driving conditions of the engine. Information about the size of this delay can be retrieved from calculations or experiments for different driving conditions of the engine and a map between the phase angle of the base functions and the position in ignition sequence of the intake valve which is controlled by different cam shapes from the remaining valves may be established.

In a preferred embodiment of the invention the information that a relatively higher intake manifold pressure corresponds to a cam profile generating a lower volumetric efficiency and a relatively lower intake manifold pressure corresponds to a cam profile generating a higher volumetric efficiency is used.

In an actual embodiment of the invention the cam mechanism includes a first lower cam profile having a height of less than 4mm above the closed position of the intake valve and a duration of the open position of less than 200° and a second higher cam profile having a height of more than 8mm above the closed position of the intake valve and a duration of the open position of more than 230°.

The invention is preferably used in connection with a combustion engine being selectively controlled to run in a first mode where said first lower cam profile should be engaged and a second mode where said second higher cam profile should be engaged, wherein said first mode is selected when the engine runs at both low load and low engine speed and said second mode is selected when the engine is run at either of high load or high engine speed.

### BRIEF DESCRIPTION OF DRAWINGS

An embodiment of the invention will be described with references to an appended set of drawings, in which
- Fig.1: shows a combustion engine at which the inventive detection method may operate,
- Fig. 2, 3, 4: show schematically, an arrangement at a cylinder in an internal combustion engine,
- Fig. 5: shows a schematic view of a part of an internal combustion engine according to one embodiment where the detection method according to the invention may be used,
- Fig. 6: shows a diagram showing critical stages of the valve lift processes of the engine from fig. 5,
- Fig. 7: shows a schematic view of a part of an internal combustion engine according to another embodiment where the detection method according to the invention may be used,
- Fig.8: shows a diagram showing critical stages of the valve lift processes of the engine from fig. 7,
- Fig. 9: shows a schematic view of a part of an internal combustion engine according a further embodiment where the detection method according to the invention may be used, and
- Fig. 10: shows a diagram showing critical stages of the valve lift processes of the engine from fig. 9.
- Fig. 11: shows an arrangement performing the method according to the invention.

### EMBODIMENT(S) OF THE INVENTION

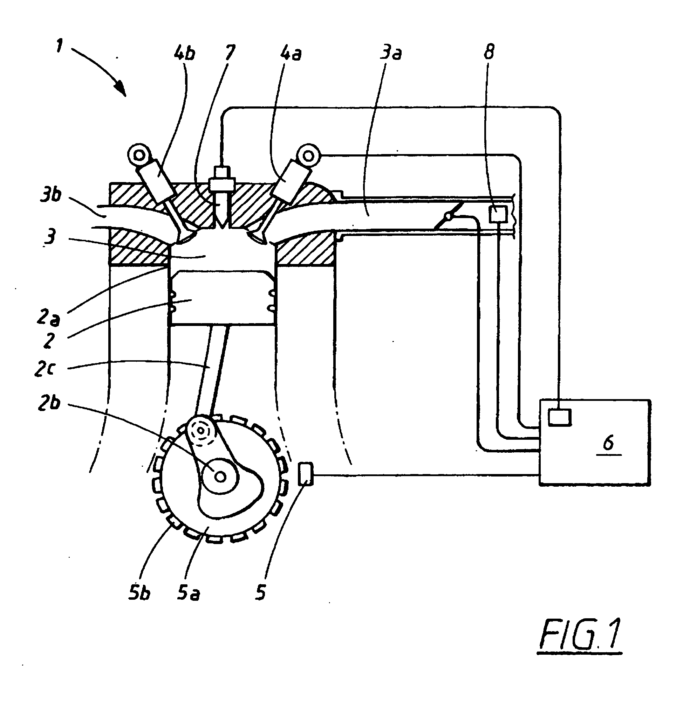

Figure 1 shows a combustion engine 1 having a piston 2 reciprocatingly arranged in a cylinder 2a. The piston 2 actuates a crank shaft 2b to which the piston 2 is connected via a connecting rod 2c. Air or an air fuel mixture is fed into a combustion chamber 3 via an intake conduit 3a. Exhaust gases are discharged through an exhaust conduit 3b. The gas exchange in the combustion chamber is controlled by intake and exhaust valves 4a,4b. The intake and/or exhaust valves may be controlled by cam profile switching means as will be disclosed below.

A crankshaft sensor 5 provides a signal corresponding to the angular position of crankshaft 2b. In the present embodiment, the crankshaft sensor 5 sense the passage of teeth arranged on a toothed wheel 5a connected to the crankshaft. The signal generated by the crankshaft sensor 5 consists of a pulse train, with each pulse corresponding to a specific section of an angle swept by crankshaft 2b. At a designated position of the crankshaft, a mark 5b is made that generates a special pulse and therefore makes it possible to determine the absolute position of the crankshaft. An electronic control unit 6 contains conventional means for determining the angular velocity of the crankshaft from the pulse train. The position within the engine cycle may then be determined with information from a cam shaft sensor in a conventional manner. The electronic control unit contains control means for controlling fuel injection to respective cylinder in the engine. The electronic control unit may furthermore contain an ignition control unit controlling the ignition timing of spark plugs 7 of the engine in the event the invention operates on a spark ignition engine. Furthermore the electronic control unit 6 communicates with a pressure sensor 8 mounted in the intake conduit. The control unit furthermore includes means for determining a component of the detected combustion related signal which has engine cycle periodicity, means for determining the amplitude value of said component, and means for detecting a failure in the cam profile switching system is detected in the event said amplitude exceeds a threshold value. The combustion related signal may be the engine speed determined from the pulse train provided from the crankshaft sensor 5 or the pressure in the intake conduit sensed by the pressure sensor 8.

The control unit furthermore contains conventional means for performing signal analysis in order to from the combustion related signal evaluate an amplitude of a component having engine cycle periodicity, which is 720 DEG in the event the engine is run in 4 stroke mode and 1440 DEG in the event the engine is run in 8 stroke mode.

The control unit additionally contains a comparator where the amplitude is compared with a threshold value. A failure in a cam profile switching system is detected if the amplitude exceeds a preset threshold value. Furthermore the control unit contains means for determining the phase angle of the component having engine cycle periodicity. The phase angle is used to determine which of switching means has failed in operation.

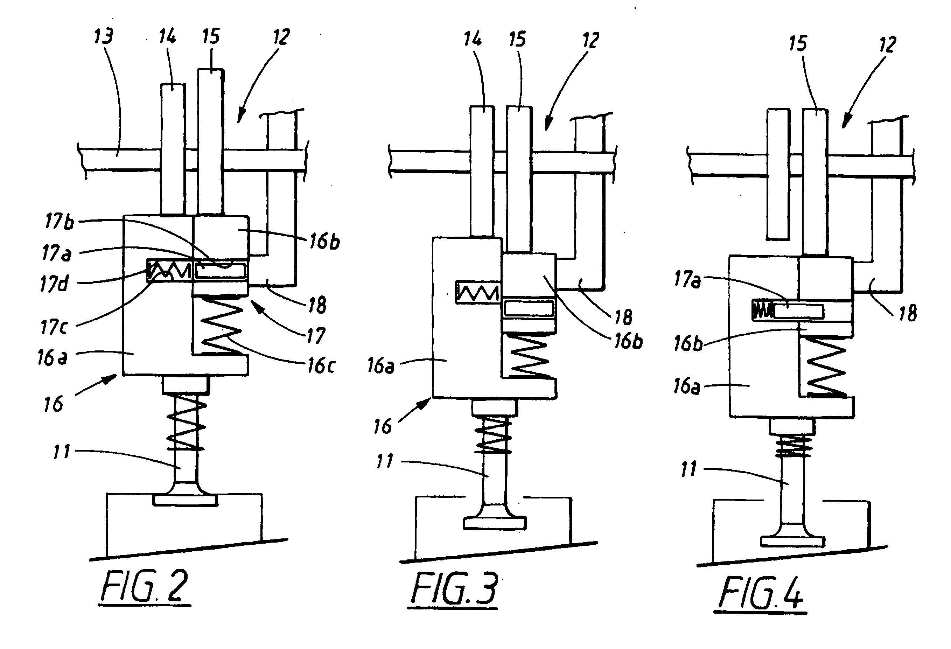

In figures 2-10 different embodiments of a combustion engine provided with an even number of cylinders constituting two separate groups of cylinders, a first switching means responsible for performing cam profile switching on the first group of cylinders and a second switching means responsible for performing cam profile switching on the second group of cylinders are shown. In these embodiments the ignition sequence is arranged such that ignitions in the individual cylinders of the first group sequentially follows after each other without interjacent ignitions in the second group and that ignitions in the individual cylinders of the second group sequentially follows after each other without interjacent ignitions in the first group.

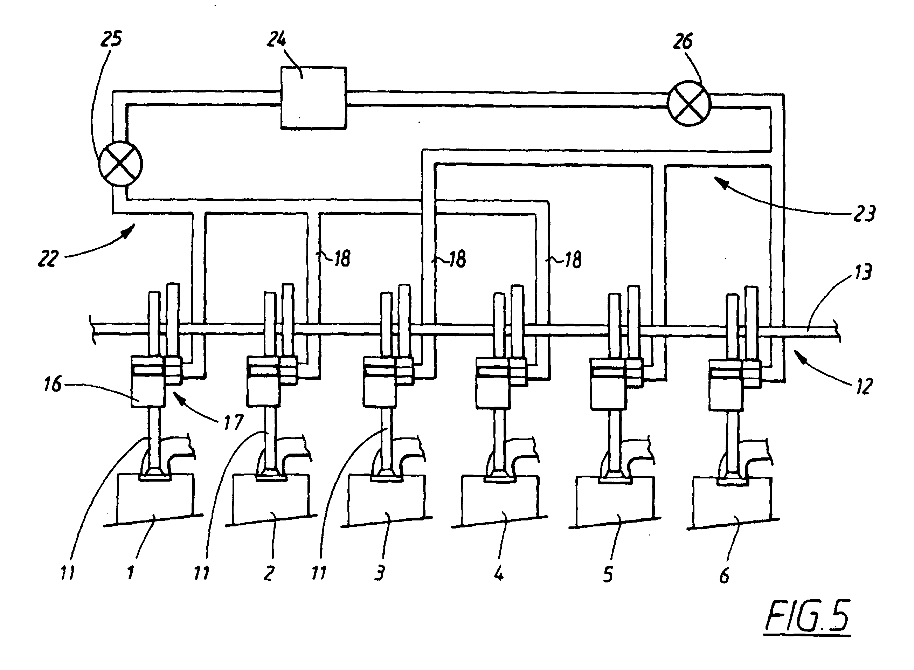

Fig. 2 shows schematically, an arrangement at a cylinder in an internal combustion engine. The engine comprises six cylinders arranged essentially along a straight line. The cylinders could be provided with ignition means in each cylinder, e.g. in the form of one or more sparkplugs, or the engine could be adapted for compression ignition. At each cylinder one, two or more intake valves, and also one, two or more exhaust valves are provided. For simplicity of this presentation, in fig. 19 only one valve 11 is shown. The valve 11 is adapted to be actuated by a valve actuation arrangement 12 including a camshaft 13. Figs. 5, 7 and 9 show a part of the valve actuation arrangement 12 and the valve 11 in positions at which the valve is not lifted. Here it is assumed that all valves in each cylinder are actuated by a camshaft, but it is also possible that only one or some of the valves are camshaft driven, and others actuated in other ways, e.g. electromagnetically. It is also possible that two or more camshafts are used, each for different valves in each cylinder and/or valves in different cylinders.

The valve actuation arrangement 12 includes cam lobes 14, 15 on the camshaft 13 and tappets 16 at each valve 11, arranged between the camshaft 13 and the valves 11 and each adapted to transfer movements from the camshaft to the respective valve 11. It is also possible that one, some or all of the tappets 16 are adapted to transfer movements to more than one valve each.

The engine is adapted to run selectively in two valve lift modes, differing regarding the valve lift characteristics influencing the duration of and/or the distance of the valve motion, i.e. the lift. The valve actuation arrangement 12 includes actuation adjustment mechanisms 17, each arranged at a tappet 16, described closer below. Each actuation adjustment mechanism 17 is adapted to adjust the respective tappet 16 so as to effect shifts from one valve lift mode to another.

In addition to different valve lift modes, the engine can be adapted to run in different operation modes. The latter can include stroke modes, such as a four stroke mode or an eight stroke mode. In an engine with camshaft actuated valves, an eight stroke mode can be achieved with cylinder deactivation, as is known in the art. The invention is also applicable to engines where all valves are actuated independently of the crankshaft. As an example, the valve actuation arrangement can include devices for electromagnetic actuation of the valves. Even if the valves are actuated independently of the crankshaft, the valve actuation arrangement can include actuation adjustment mechanisms for shifting between different valve lift modes. In an engine where the valves are actuated independently of the crankshaft, many different engine operation modes in the form of stroke modes can be achieved, e.g. two, four, six, eight, twelve or sixteen stroke mode.

Fig. 2 shows schematically a valve 11 and a part of the valve actuation arrangement 12 in positions at which the valve is not lifted. The valve actuation arrangement 12 includes for each valve a first cam lobe, herein referred to as a low lift cam lobe 14, and a second cam lobe, herein referred to as a high lift cam lobe 15, on the camshaft 13. The high lift cam lobe 15 has a larger eccentric than the low lift cam lobe 14. The high lift cam lobe 15 can also, or alternatively, have a different profile than the low lift cam lobe 14 so as to provide for different valve lift characteristics during parts or the whole lifting process, and also a different duration and/or timing of lifting process.

The tappet 16 comprises two parts, a main part 16a and an additional part, herein referred to as a high lift part 16b, whereby the high lift part 16b is movable in relation to the main part 16a in direction perpendicular to the camshaft 13, and biased towards the camshaft by means of a spring 16c. The actuation adjustment mechanism 17 can assume a first position in which a first valve lift mode, in this example also called a low lift mode, can be effected. The actuation adjustment mechanism 17 includes a locking device comprising a locking pin 17a. In the first position of the actuation adjustment mechanism 17 the locking pin 17a is located in a first space 17b, with a delimitation having an elongated shape, in the high lift part 16b. Thereby, the locking device is in an unlocked position.

Fig. 3 shows schematically the valve 11 and a part of the valve actuation arrangement 12 at maximum lift of the valve 11 in the low lift mode. The low lift cam lobe 14 pushes the tappet 16 and the valve 11, at which the high lift cam lobe 15 pushes the high lift part 16b along the main part 16a, without acting on the valve 11.

Referring to fig. 2, the locking pin 17a can be moved into a second space 17c in the main part 16a with hydraulic pressure provided through an oil gallery 18 of a mechanism control system, a part of which is shown in fig. 19 and which communicates, at least when the valve is not lifted, with the first space 17b. To shift from the first valve lift mode to a second valve lift mode, in this example referred to as high lift mode, the locking pin is moved by hydraulic pressure, provided through the oil gallery 18, partly into the second space 17c, for the actuation adjustment mechanism 17 to assume a second position, here a locking position. Thereby, the high lift part 16b is locked to the main part 16a.

A spring 17d provides for moving the locking pin 17a out of the second space 17c when the hydraulic pressure is released. Thereby, a shift from the high lift to the low lift mode is possible. Alternatively, the locking pin can be moved out of the second space 17c by hydraulic pressure in an additional oil gallery that communicates with the second space 17c.

Fig. 4 shows schematically the valve 11 and a part of the valve actuation arrangement 12 at maximum lift of the valve 11 in the high lift mode. The high lift cam lobe 15 acts on the valve 11 via the high lift part 16b, the locking pin 17a, and the main part 16a. The valve actuation arrangement in fig. 5, 7 and 9 corresponds schematically to a CPS (Cam Profile Shifting) system.

As can be understood from the above, a shift of valve modes can not be effectuated when the valve is in the process of lifting, since parts of the actuation adjustment mechanism 17, i.e. the locking pin 17a, the first space 17b, and the second space 17c, have to be positioned properly in relation to each other for the locking pin to move in or out of the locking position. Also, if a shift from the low to the high lift mode is attempted during the initial phase of the lifting process of a valve, referring to fig. 5, the relative movement between the main part 16a and the high lift part 16b and the simultaneous movement of the locking pin 17a towards the second space 17c could result in excessive wear or damages of certain parts. This problem is present in all valve actuation arrangements, where shifting between different valve lift modes are effected by means of locking mechanisms, different parts of which move in relation to each other during valve lift processes.

Thus, the valve mode shifts have to be effected during crank shaft angle intervals between the valve lift processes, or at least between critical stages of the valve lift processes. In the example above such a critical stage is when different parts, i.e. referring to fig. 5 the main part 16a and the high lift part 16b, of each actuation adjustment mechanism start moving in relation to each other. Typically, in CPS system such a critical stage including safety margins is approximately 10 CA (crankshaft angle degrees). However, the duration of the critical stage can vary depending on the type of actuation adjustment mechanism used, or the tolerances in the valve train. In a four stroke operation mode of a six cylinder engine there is, at least on average, 120 CA between each intake valve actuation or each exhaust valve actuation. Then, if the oil gallery 18, (fig. 5), communicates with actuation adjustment mechanisms of all cylinders, there are windows of approximately 110 CA in which mode shifts can be carried out. This is a relatively small interval which put high demands on accuracy of any control system for the actuation adjustment mechanisms.

If there are two parts of a hydraulic system, or two hydraulic systems, that can be controlled separately and each of which communicates through respective oil galleries with actuation adjustment mechanisms of a separate set of cylinders, the windows for valve lift mode shifts can be larger. We assume that in an inline six cylinder engine, the cylinders being denoted 1, 2, 3, 4, 5, 6, corresponding to their relative spatial position, one set comprises cylinders 1, 2 and 3, and another set comprises cylinders 4, 5 and 6, and also that the ignition sequence of the engine is 1-5-3-6-2-4. Then, in a four stroke operation mode of the engine there is in each set, at least on average, 240 CA between initiations of the valve lift processes, which leaves windows of 230 CA for mode switch operations, if critical stages of the valve lift processes are taken into account.

The combustion engine may include the arrangement shown in fig. 5, 7, and 9. As mentioned, the six cylinders 1, 2, 3, 4, 5, 6 are arranged essentially along a straight line. A hydraulic system includes a first sub system 22, herein also referred to as a first mechanism control system 22, and a second sub system 23, herein also referred to as a second mechanism control system 23, both adapted to be pressurized by a common hydraulic pump 24. Alternatively, the first mechanism control system 22 and the second mechanism control system 23, could be respective parts of two separate hydraulic systems.

As an alternative, each actuation adjustment mechanism 17 could be electromagnetic arrangements, whereby the first and the second mechanism control system 22, 23 could be provided as electric systems.

Each mechanism control system 22, 23 communicates with the actuation adjustment mechanisms 17 at a respective set of the cylinders. The first mechanism control system 22 and the second mechanism control system 23 includes a first 25 and a second control valve 26, respectively, to control the pressure in the oil galleries 18. Suitably, the first and second control valves 25, 26 are solenoid valves controllable through signals from a control system of the engine.

In a combustion engine at which the inventive detection method may be used, the sets of cylinders are arranged in view of the ignition sequence of the engine. In this example the ignition sequence of the engine in a four stroke mode is 1-5-3-6-2-4, which is a standard sequence for inline six cylinder engines. A first set of cylinders, controllable through the first mechanism control system 22, includes two cylinders 1, 2 closest to a first end of the row of cylinders, and the fourth cylinder 4 in relation to the first end of the row of cylinders. A second set of cylinders, controllable through the second mechanism control system 23, includes two cylinders 5, 6 closest to a second end of the row of cylinders, and the third cylinder 3 in relation to the first end of the row of cylinders. This means that the first set of cylinders 1, 2, 4 is adapted so that each ignition in a cylinder of the first set 1, 2, 4 is preceded and/or followed by an ignition in a cylinder of the first set 1, 2, 4, without any intermediate ignition in the second set of cylinders. Similarly, the second set of cylinders 3, 5, 6 is adapted so that each ignition in a cylinder of the second set 3, 5, 6 is preceded and/or followed by an ignition in a cylinder of the second set 3, 5, 6, without any intermediate ignition in the first set of cylinders. In other words, each set of cylinders consists of cylinders which are consecutive in a firing sequence. Thereby, at least one cylinder of the second set of cylinders is positioned between two cylinders of the first set of cylinders, and at least one cylinder of the first set of cylinders is positioned between two cylinders of the second set of cylinders.

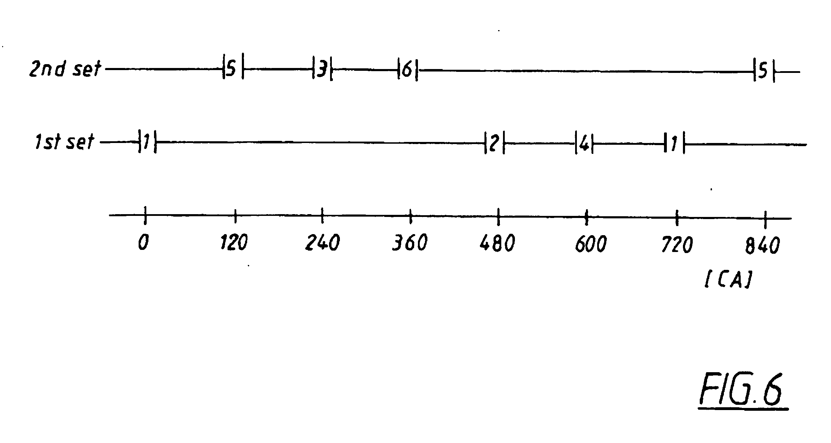

To clarify the advantage of the particular embodiments of the combustion engines disclosed herein and at which the inventive detection method may be used, fig. 6 shows a diagram of valve lift processes in the engine partly depicted in fig. 5. The diagram shows critical stages of the valve lift processes in actuation adjustment mechanisms of each set of cylinders, indicated with the cylinder number at respective crankshaft angles. It can be seen that in each four stroke cycle and for each set of cylinders there is one large window, also called trigger window, of approximately 470 CA if a duration of 10 CA is assumed. Thereby, if a valve lift mode shift is requested, this can be effected by activating the first mechanism control system 22 during an interval between critical stages at the first and the second cylinder 1, 2, and activating the second mechanism control system 23 during an interval between critical stages at the sixth and the fifth cylinder 6, 5.

The large windows in the CA domain for effecting valve lift mode shifts, achieved by the embodiments of the combustion engines disclosed, drastically reduces risks of triggering a mode shift at the wrong moment. This will reduce risks of damages occurring in the engine, especially in the valve trains, due to a mode shift being effected during a critical stage of the valve lifting process. The large windows achieved will also increase considerably the predictability for each cylinder of the cycle in which the mode shift will be effected. This will substantially reduce the risk of a mode shift being effected in a cycle different to the predicted cycle, which could result in a lack of coordination between the valve lift and other parameters, such as the amount of air to be inducted, which in turn could result in a misfire. The large windows achieved by the embodiments of combustion engines disclosed herein allows for relatively low tolerances and relatively large inaccuracies in the action of the mode shift arrangement, which can simplify the design thereof and lower production costs.

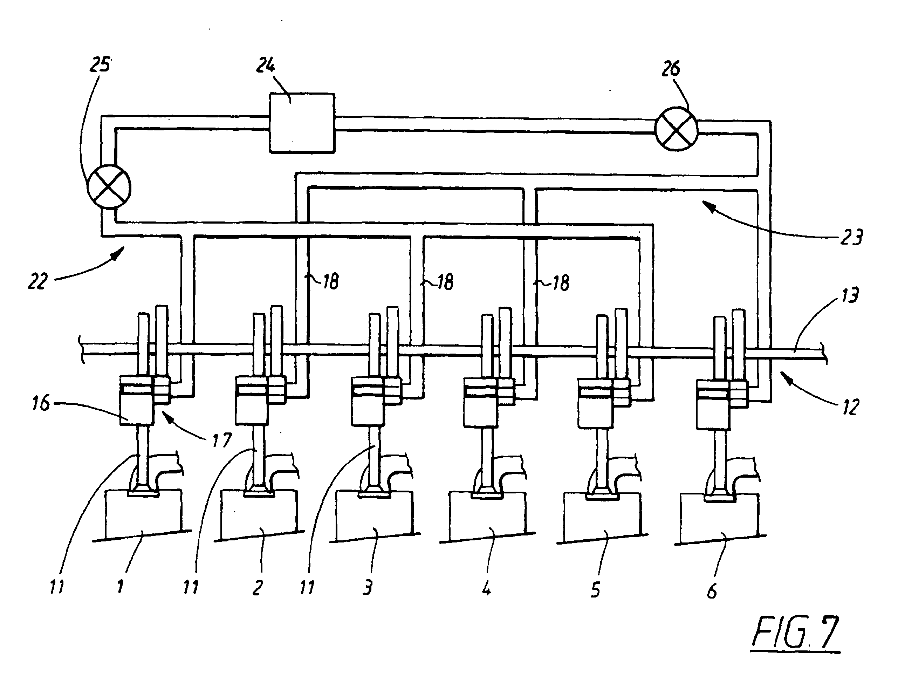

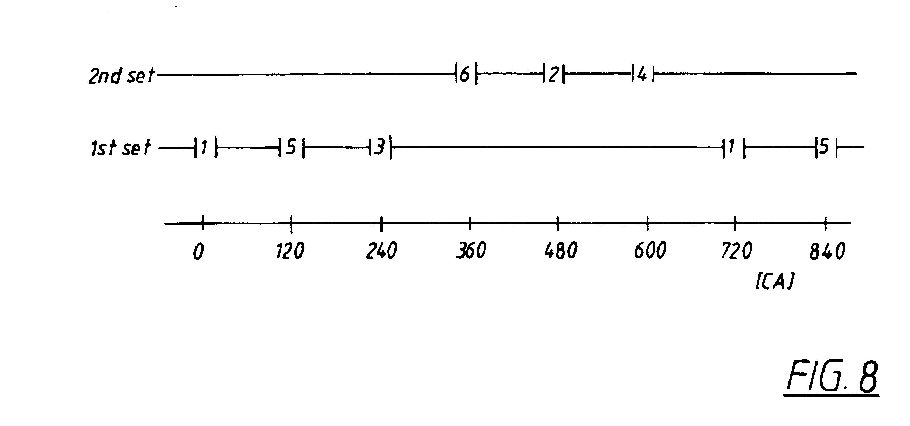

Fig. 7 shows a schematic view of a part of the internal combustion engine according to an alternative combustion engine arrangement. The arrangement may include the assembly shown in fig. 2, 3, and 4. As in the example described with reference to fig. 8, here there are six cylinders 1, 2, 3, 4, 5, 6 are arranged essentially along a straight line, a hydraulic system, with a first mechanism control system 22 and a second mechanism control system 23 both adapted to be pressurized by a common hydraulic pump 24. As described above, each mechanism control system 22, 23 communicates with the actuation adjustment mechanisms 17 at a respective set of the cylinders, and the first mechanism control system 22 and the second mechanism control system 23 includes a first 25 and a second control valve 26, respectively.

The ignition sequence of the engine is the same as above, i.e. 1-5-3-6-2-4. Differing from the example above, here a first set of cylinders, controllable through the first mechanism control system 22, includes the first, third and fifth cylinder 1, 3, 5 in relation to a first end of the row of cylinders. A second set of cylinders, controllable through the second mechanism control system 23, includes the second, fourth and sixth cylinder 2, 4, 6 in relation to the first end of the row of cylinders. Thereby, the first set of cylinders 1, 3, 5 is adapted so that each ignition in a cylinder of the first set 1, 3, 5 is preceded and/or followed by an ignition in a cylinder of the first set 1, 3, 5, without any intermediate ignition in the second set of cylinders. Similarly, the second set of cylinders 2, 4, 6 is adapted so that each ignition in a cylinder of the second set 2, 4, 6 is preceded and/or followed by an ignition in a cylinder of the second set 2, 4, 6, without any intermediate ignition in the first set of cylinders. In other words, each set of cylinders consists of cylinders which are consecutive in a firing sequence.

Fig. 8 shows a diagram of valve lift processes in the engine partly depicted in fig. 7. The diagram shows critical stages of the valve lift processes, similarly to fig. 6 referred to above. In each four stroke cycle and for each set of cylinders there is one large window of approximately 470 CA if a duration of 10 CA is assumed. Thereby, if a valve lift mode shift is requested, this can be effected by activating the first mechanism control system 22 during an interval between critical stages at the third and the first cylinder 3, 1, and activating the second mechanism control system 23 during an interval between critical stages at the fourth and the sixth cylinder 4, 6.

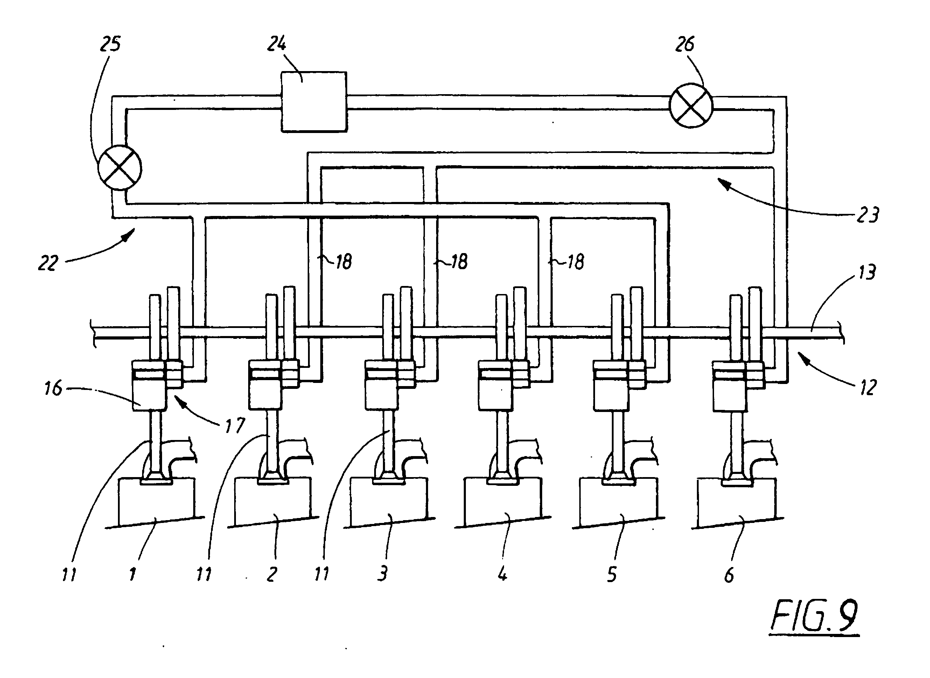

Fig. 9 shows a schematic view of a part of the internal combustion engine according to a further embodiment of a combustion engine arrangement, and including the arrangement shown in fig. 2, 3, and 4. Differing from the embodiments shown in fig. 5 and 7, a first set of cylinders, controllable through a first mechanism control system 22, includes the first, fourth and fifth cylinder 1, 4, 5 in relation to a first end of the row of cylinders. A second set of cylinders, controllable through a second mechanism control system 23, includes the second, third and sixth cylinder 2, 3, 6 in relation to the first end of the row of cylinders. As in the embodiments described above, ignitions in each set of cylinders are consecutive.

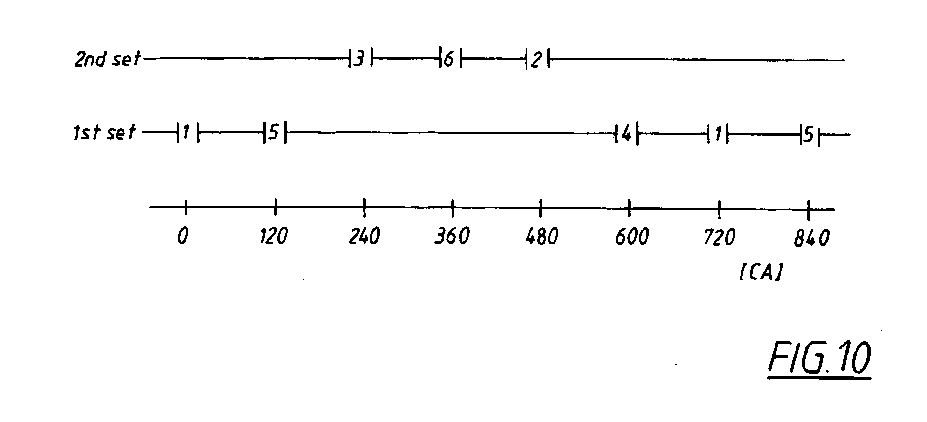

Fig. 10 shows a diagram of valve lift processes in the engine partly depicted in fig. 26. The diagram shows critical stages of the valve lift processes, similarly to fig. 23 and 25 referred to above. In each four stroke cycle and for each set of cylinders there is a window of approximately 470 CA if a duration of 10 CA is assumed, and if a valve lift mode shift is requested, this can be effected by activating the first mechanism control system 22 during an interval between critical stages at the fifth and the fourth cylinder 5, 4, and activating the second mechanism control system 23 during an interval between critical stages at the second and the third cylinder 2, 3.

It should be pointed out that the embodiment described above with reference to fig. 5 has special merits in that, in comparison to e.g. the embodiment described with reference to fig. 7, it provides for shorter channels in the engine block for the oil galleries 18. Also, it contains less intersections of conduits of separate oil galleries 18, which is an advantage, since these intersections present problems in the design and manufacturing of the engine. Thus, this embodiment will result in a relatively simple design and relatively low manufacturing costs.

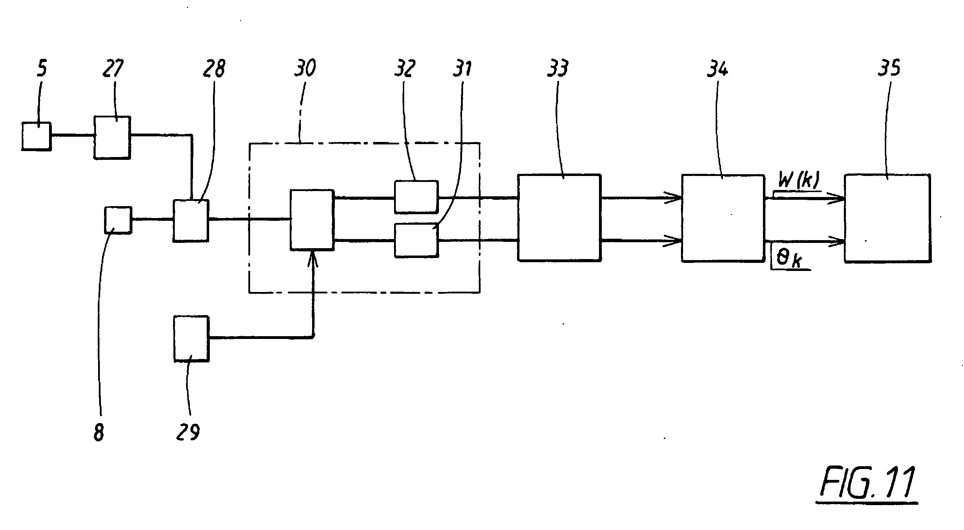

In figure 11 a system for performing the method according to the invention is shown. The system includes means for detecting the angular position of the crank shaft in the form of a crank shaft sensor 5 generating a pulse train, which pulse train is received by a counter 27 keeping track of the angular position ϕ of the crank shaft in the engine cycle [ϕ:0 - ω]. Information from a cam shaft sensor ensures in a conventional manner that the position within the engine cycle may be determined. The counter is preferably arranged such to start counting from a determined position of the first cylinder in the ignition sequence until the same position is reached again, when the counter is set to zero. It may for example be appropriate for the counter to count from 0 to 23 representing a 720° engine cycle.

The system further includes a sensor 8 for sensing a parameter having cyclic behaviour with respect to the angular position of a crank shaft arranged in the engine and which parameter (dP/dϕ,dn/dϕ) is a function of the volumetric efficiency (η) of the cylinder depletion. The sensor is preferably a pressure sensor 8 installed in the intake conduit of the engine. Samples from the sensor 8 are collected at a sampling unit 28. The sampling unit uses input information from the counter 27 in order to coordinate the input signal from the sensor 5 with a specific position in the engine cycle.

The system furthermore includes a function block 29 arranged to generate functional values of a set of stored base functions Fₖ. The base functions consists of a set of trigonometric functions of various orders k (cosk(2π/ω)ϕ + jsink(2π/ω)ϕ). Here k is preferably selected to include all integers k such that base functions includes the trigonometrical functions with the following periods: ω/X, for all even denominators X of the number of combustion chambers N. For example, for a 4 cylinder engine the periods of ω, ω/2 and ω/4 should be selected, thus k ∈ [1, 2, 4]. For a 5 cylinder engine the periods of ω, and ω/5 should be selected, thus k ∈ [1, 5]. For a 6 cylinder engine the periods of ω, ω/2, ω/3 and ω/6 should be selected, thus k ∈ [1, 2, 3,6]. For an 8 cylinder engine the periods of ω, ω/2, ω/4 and ω/8 should be selected, thus k ∈ [1, 2, 4, 8]. For a 12 cylinder engine the periods of ω, ω/2, ω/3, ω /4, ω/6 and ω/12 should be selected, thus k ∈ [1, 2, 3, 4, 6, 12].

Function values of the base functions are created at the function block 29 and a product of the sampled values xᵢ and the value of the base functions Fₖ(ϕ) at the sampled crank angle (ϕ) are formed at a block 30 for estimating the weight coefficients (W(k)) for the base functions Fₖ(ϕ) includes two sub blocks 31, 32, one for forming the weight coefficients for the imaginary part βₖ of the base function and one for forming the real part αₖ of the base function in the event the engine parameter (dP/dϕ,dn/dϕ) having a cyclic behaviour with respect to the angular position of a crank shaft is to be represented by a Fourier series. In an average forming block 33, a floating average of the real and imaginary parts (α, βₖ) is formed and used as an estimate of the weight coefficients W(k)=(αₖ² + βₖ²)^{1/2} for the base functions Fₖ(ϕ). It may be appropriate to use a window for forming the average that makes use of information from samples taken over more than one engine cycle, for instance up till 4 or more engine cycles in order top obtain a suitable estimate of the weight coefficients for respective real and imaginary parts (α, βₖ) of the base function. Once an estimate of the weight coefficients for respective real and imaginary parts (α, βₖ) of the base function have been obtained, the phase angle ⊖ₖ for respective base function may be obtained in a straightforward conventional manner. The phase angle ⊖ₖ and the weight coefficients W(k)=(αₖ² + βₖ²)^{1/2} are determined in a block 34 using the average of the weight coefficients for respective real and imaginary parts (α, β ₖ) formed in the average forming block 33.

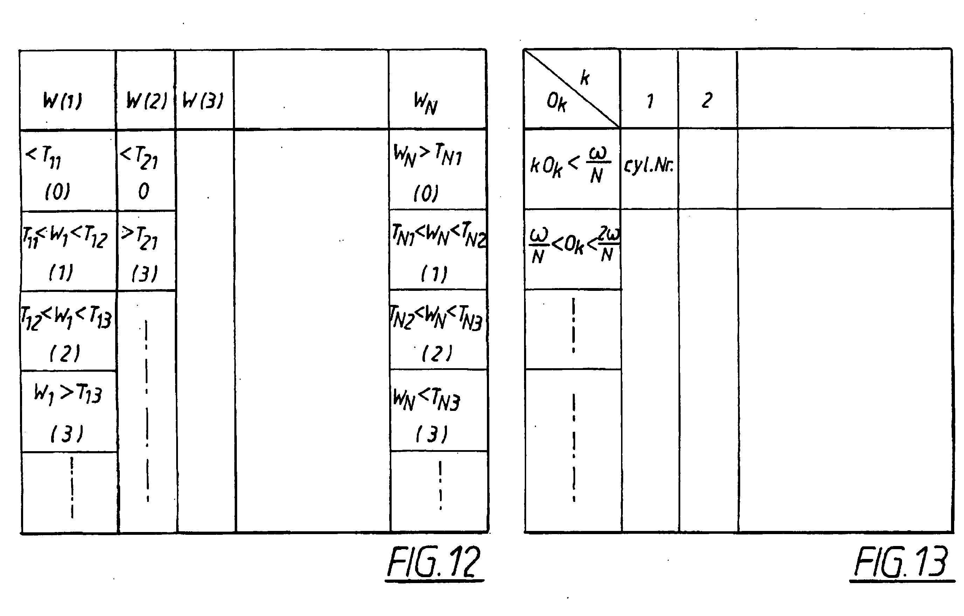

In a comparator block 35 the weight coefficients W(k) are compared with threshold values Tₖ in order to decide whether all valves are actuated by the same cam profiles or not. The comparison between the weight coefficients W(k) and the threshold values Tₖ may preferably be performed as suggested in figure 12, where some weight coefficients W(k), especially the weight coefficient for the first order W(1) is compared with a plurality of threshold values T₁ᵢ. Since the excitation of the base function of any order grows as the number of cam shafts engaged in a mode which contributes to the excitation of a specific order grows it is possible to obtain information about how many valves are engaged with cam profiles contributing to the excitation of a certain mode. For instance as the number of valves being controlled by cam profiles exciting the first base function grows, the base function for the first base function will grow. As an example, the cam profile engagement scenario, HHHHLLLL will generate a larger excitation of the first base function, than LHHHLLLL, which in turn will generate a larger excitation of the first base function than LHHLLLLL, which in turn will generate a larger excitation of the first base function than LHLLLLLL. For the base function of the first and Nth orders , it is desirable to have a number of threshold values corresponding to the integer of (N + 3)/2. the relationship between the number of cylinders having valves operating in a different mode and the size of the weight function may be stored in a matrix. The appropriate threshold values can be obtained by tests on engines where the valves are forced to operate in desired modes. The matrix 36 contains information about appropriate threshold values for all weight coefficients of the base functions used. For some of the base functions in addition to the base function of the first order, as for instance the base function of the Nth order, it may be useful to have a plurality of threshold values. Since the excitation of the base function of the Nth order decreases as the number of valve that are engaged with cam profiles having a different shape increases it is possible to obtain information about how many valves are operated by a cam profile of a different shape. For the base function of the Nth order, it is therefore desirable to have a number of threshold values corresponding to the integer of (N + 3)/2.

A further comparison between phase angle and threshold values corresponding to determined phase angle intervals for respective base function is performed in the comparator block. The comparison may make use of a matrix of the type shown in figure 12. A specific interval of the phase angle determines the actual position in an engine cycle of the intake valves whose position are controlled by cam profiles having different shape in relation to the cam profiles of the remaining intake valves. The cylinder or the valve associated with the interval is denoted in the matrix.

## Claims

1. Method of diagnosing the operation of a cam profile shifting system (12) for a combustion engine including a set of combustion chambers (3), each being provided with at least one intake valve (11) and a cam mechanism acting (17,14, 15) on each intake valve (11), said cam mechanism (13,14, 15) having at least two separate cam profiles (14,15) with different shapes and being controlled to selectably engage one of said cam profiles (14,15) for controlling the position of the intake valve (11), said method including the steps of:
a) detecting an engine parameter (dP/dϕ,dn/dϕ) having a cyclic behaviour with respect to the angular position (ϕ) of a crank shaft (2b) arranged in the engine and which parameter (dP/dϕ,dn/dϕ) is a function of the volumetric efficiency (η) of the cylinder depletion;
b) collecting a set of samples (xᵢ) of said engine parameter (dP/dϕ,dn/dϕ) during at least one engine cycle (w) including a combustion event for each cylinder (3) in said set of combustion chambers;
c) calculating the weight coefficient (W(1)) for a trigonometric base function F₁ including the trigonometrical function of the 1st order (cos(2π/ω)ϕ + jsin(2π/ω)ϕ) of the engine cycle (ω), in the crank angle domain [ϕ:0 - ω];
d) comparing the weight coefficient (W(1)) with threshold value (T₁ᵢ) and concluding that the positions of all intake valves are not controlled by cam profiles of the same shape in the event the weight coefficient for the trigonometric base function F₁ of the 1st order (cos(2π/ω)ϕ + jsin(2π/ω)ϕ) is above a threshold value, **characterised in that** the step c) of calculating the weight coefficient (W(1)) for the base function F₁ includes the step of forming the product of the sampled value xᵢ and the value of the base function F₁ at the sampled crank angle (ϕ).

2. Method according to claim 1, **characterised in that** the step c) furthermore includes the step of calculating the weight coefficients (W(k)) for a set of trigonometric base functions Fₖ including the trigonometrical function of the Nth order (cosN(2π/ω)ϕ + jsinN(2π/ω)ϕ) of the engine cycle (w), where N is the number of combustion chambers (3), with a frequency corresponding to the combustion frequency (ω/N) in the crank angle domain [ϕ:0 - w] and at least another trigonometrical function (cosM(2π/ω)ϕ + jsinM(2π/ω)ϕ) of lower order (M:M<N) than said Nth order trigonometrical function and the step d) of comparing the weight coefficients (W(k)) includes the steps of comparing the weight coefficients (W(k)) for said base functions Fₖ with respective threshold values (Tₖ) and concluding that the positions of all intake valves (11) are not controlled by cam profiles (14,15) of the same shape in the event the weight coefficients (W(k)) for the base functions Fₖ for any order other than the Nth order (k≠N) are above a threshold value (Tₖ) or the weight coefficient (W(N)) of the Nth order is below a threshold value (T_{N}).

3. Method of diagnosing the operation of a cam profile system according to claims 1 or 2, **characterised in that** the weight coefficients (W(k)) are calculated using a direct Fourier transform.

4. Method of diagnosing the operation of a cam profile system according to any of claims 1 - 3, where the control of the cam mechanisms (17) for the set of combustion chambers is performed by two actuators (22,23), each being responsible for the cam profile shift for a group of combustion chambers (3) consisting of half of the combustion chambers in said set and where the combustion chambers in each group consists of those combustion chambers whose ignition sequently follows each other in order such that the ignition for all combustion chambers is completed in one group before ignition in the other group is started, **characterised in that** it is concluded that the intake valves (11) of one group are controlled by a cam having a different shape than the intake valves (11) of the other group in the event the weight coefficient of the base function of the first order is above a threshold value.

5. Method according to any of claims 1 - 4, **characterised in that** said base functions includes the trigonometrical functions with the following periods: ω/X, for all even denominators X of the number of combustion chambers N.

6. Method according to any of claims 1 - 5, **characterised in that** the frequency or frequencies of the base functions (Fₖ) other orders than the Nth order having a weight coefficient (W(k)) above a corresponding threshold Tₖ value determines the permutation in an engine cycle of the relative position of the intake valves (11) whose positions are controlled by cam profiles (14,15) having a different shape in relation to the cam profiles (14,15) controlling the remaining intake valves.

7. Method according to any of claims 1 - 6, **characterised in that** the phase angle or angles (Θₖ) of the base functions (Fₖ), other than the base function of the Nth order, having a weight coefficient above a corresponding threshold value Tₖ determines the actual positions in the ignition sequence of the intake valves whose positions are controlled by cam profiles having a different shape in rotation to the cam profiles (14,15) controlling the remaining intake valves.

8. Method according to any of the preceding claims, **characterised in that** said engine parameter is constituted by the derivative with respect to a crank shaft angle (dP/dϕ) of an intake manifold pressure P.

9. Method according to claim 8, **characterised in that** a relatively higher intake manifold pressure P corresponds to a cam profile generating a lower volumetric efficiency and a relatively lower intake manifold pressure P corresponds to a cam profile generating a higher volumetric efficiency.

10. Method according to claim 9, **characterised in that** the cam mechanism includes a first lower cam profile (14) having a height of less than 4mm above the closed position of the intake valve and a duration of the open position of less than 200° and a second higher cam profile (15) having a height of more than 8mm above the closed position of the intake valve and a duration of the open position of more than 230°.

11. Method according to claim 10, which method is used to diagnose a combustion engine being selectively controlled to run in a first mode where said first lower cam profile (14) should be engaged and a second mode where said second higher cam profile (15) should be engaged, wherein said first mode is selected when the engine runs at both low load and low engine speed and said second mode is selected when the engine is run at either of high load or high engine speed.

## Patentansprüche

1. Verfahren zum Diagnostizieren des Betriebs eines Nockenprofil-Umschaltsystems (12) für einen Verbrennungsmotor mit einem Satz von Brennräumen (3), die jeweils mit mindestens einem Einlaßventil (11) und einem auf jedes Einlaßventil (11) wirkenden (17, 14, 15) Nockenmechanismus versehen sind, wobei der Nockenmechanismus (13, 14, 15) mindestens zwei separate Nockenprofile (14, 15) mit unterschiedlichen Formen hat und so gesteuert wird, daß er einen auswählbaren Eingriff mit einem der Nockenprofile (14, 15) zum Steuern der Position des Einlaßventils (11) herstellt, wobei das Verfahren die Schritte aufweist:
a) Detektieren eines Motorparameters (dP/dϕ, dn/dϕ) mit einem zyklischen Verhalten im Hinblick auf die Winkelposition (ϕ) einer im Motor angeordneten Kurbelwelle (2b) und wobei der Parameter (dP/dϕ, dn/dϕ) eine Funktion des volumetrischen Wirkungsgrads (η) der Zylinderabreicherung ist;
b) Erfassen eines Satzes von Abtastungen (xᵢ) des Motorparameters (dP/dϕ, dn/dϕ) während mindestens eines Motorzyklus (ω) mit einem Verbrennungsereignis für jeden Zylinder (3) in dem Satz von Brennräumen;
c) Berechnen des Gewichtskoeffizienten (W(1)) für eine trigonometrische Basisfunktion F₁ mit der trigonometrischen Funktion erster Ordnung (cos(2π/ω)ϕ + jsin(2π/ ω)ϕ) des Motorzyklus (ω) in der Kurbelwinkeldomäne [ϕ:0 - ω];
d) Vergleichen des Gewichtskoeffizienten (W(1)) mit Schwellwert (T₁ᵢ) und Schlußfolgern, daß die Positionen aller Einlaßventile nicht durch Nockenprofile mit der gleichen Form gesteuert werden, wenn der Gewichtskoeffizient für die trigonometrische Basisfunktion F₁ erster Ordnung (cos(2π/ω)ϕ + jsin (2π/ω)ϕ) über einem Schwellwert liegen, **dadurch gekennzeichnet, daß** der Schritt c) des Berechnens des Gewichtskoeffizienten (W(1)) für die Basisfunktion F₁ den Schritt des Bildens des Produkts des Abtastwerts xi und des Werts der Basisfunktion F₁ am abgetasteten Kurbelwinkel (ϕ) aufweist.

2. Verfahren nach Anspruch 1, **dadurch gekennzeichnet, daß** der Schritt c) weiterhin den Schritt aufweist: Berechnen der Gewichtskoeffizienten (W(k)) für einen Satz trigonometrischer Basisfunktionen Fₖ mit der trigonometrischen Funktion N-ter Ordnung (cosN(2π/ω)ϕ + jsinN(2π/ω)ϕ) des Motorzyklus (ω), wobei N die Anzahl von Brennräumen (3) ist, mit einer Häufigkeit entsprechend der Verbrennungshäufigkeit (ω/N) in der Kurbelwinkeldomäne [ϕ:0 - ω] und mindestens einer weiteren trigonometrischen Funktion (cosM(2π/ω)ϕ + jsinM(2π/ω)ϕ) niedrigerer Ordnung (M:M < N) als die trigonometrische Funktion N-ter Ordnung, und der Schritt d) des Vergleichens der Gewichtskoeffizienten (W(k)) die Schritte aufweist: Vergleichen der Gewichtskoeffizienten (W(k)) für die Basisfunktionen Fₖ mit jeweiligen Schwellwerten (Tₖ) und Schlußfolgern, daß die Positionen aller Einlaßventile (11) nicht durch Nockenprofile (14, 15) mit der gleichen Form gesteuert werden, wenn die Gewichtskoeffizienten (W(k)) für die Basisfunktionen Fₖ für jede andere Ordnung als die N-te Ordnung (k ≠ N) über einem Schwellwert (Tₖ) liegen oder der Gewichtskoeffizient (W(N)) der N-ten Ordnung unter einem Schwellwert (T_{N}) liegt.

3. Verfahren zum Diagnostizieren des Betriebs eines Nockenprofilsystems nach Anspruch 1 oder 2, **dadurch gekennzeichnet, daß** die Gewichtskoeffizienten (W(k)) mit Hilfe einer direkten Fourier-Transformation berechnet werden.

4. Verfahren zum Diagnostizieren des Betriebs eines Nockenprofilsystems nach einem der Ansprüche 1 bis 3, wobei die Steuerung der Nockenmechanismen (17) für den Satz von Brennräumen durch zwei Aktoren (22, 23) durchgeführt wird, die jeweils für die Nockenprofilumschaltung für eine Gruppe von Brennräumen (3) zuständig sind, die aus der Hälfte der Brennräume in dem Satz besteht, und wobei die Brennräume in jeder Gruppe aus jenen Brennräumen bestehen, deren Zündung nacheinander so aufeinander folgt, daß die Zündung für alle Brennräume in einer Gruppe abgeschlossen ist, bevor Zündung in der anderen Gruppe begonnen wird, **dadurch gekennzeichnet, daß** geschlußfolgert wird, daß die Einlaßventile (11) einer Gruppe durch eine Nocke mit einer unterschiedlichen Form als die Einlaßventile (11) der anderen Gruppe gesteuert werden, wenn der Gewichtskoeffizient der Basisfunktion erster Ordnung über einem Schwellwert liegt.

5. Verfahren nach einem der Ansprüche 1 bis 4, **dadurch gekennzeichnet, daß** die Basisfunktionen die trigonometrischen Funktionen mit den folgenden Perioden aufweisen: ω/X für alle geradzahligen Nenner X der Anzahl von Brennräumen N.

6. Verfahren nach einem der Ansprüche 1 bis 5, **dadurch gekennzeichnet, daß** die Häufigkeit(en) der Basisfunktionen (Fₖ) anderer Ordnungen als der N-ten Ordnung mit einem Gewichtskoeffizienten (W(k)) über einem entsprechenden Schwellwert Tₖ die Permutation der Relativposition der Einlaßventile (11) in einem Motorzyklus bestimmen, deren Positionen durch Nockenprofile (14, 15) mit einer unterschiedlichen Form bezogen auf die Nockenprofile (14, 15) gesteuert werden, die die übrigen Einlaßventile steuern.

7. Verfahren nach einem der Ansprüche 1 bis 6, **dadurch gekennzeichnet, daß** der (die) Phasenwinkel (Θₖ) der Basisfunktionen (Fₖ) mit Ausnahme der Basisfunktion N-ter Ordnung mit einem Gewichtskoeffizienten über einem entsprechenden Schwellwert Tₖ die Ist-Positionen in der Zündfolge der Einlaßventile bestimmen, deren Positionen durch Nockenprofile mit einer unterschiedlichen Form bezogen auf die Nockenprofile (14, 15) gesteuert werden, die die übrigen Einlaßventile steuern.

8. Verfahren nach einem der vorstehenden Ansprüche, **dadurch gekennzeichnet, daß** der Motorparameter durch die Ableitung eines Einlaßkrümmerdrucks P nach einem Kurbelwellenwinkel (dP/dϕ) gebildet ist.

9. Verfahren nach Anspruch 8, **dadurch gekennzeichnet, daß** ein relativ höherer Einlaßkrümmerdruck P einem Nockenprofil entspricht, das einen niedrigeren volumetrischen Wirkungsgrad erzeugt, und ein relativ niedrigerer Einlaßkrümmerdruck P einem Nockenprofil entspricht, das einen höheren volumetrischen Wirkungsgrad erzeugt.

10. Verfahren nach Anspruch 9, **dadurch gekennzeichnet, daß** der Nockenmechanismus aufweist: ein erstes niedrigeres Nockenprofil (14) mit einer Höhe unter 4 mm über der geschlossenen Position des Einlaßventils und einer Dauer der offenen Position unter 200° sowie ein zweites höheres Nockenprofil (15) mit einer Höhe über 8 mm über der geschlossenen Position des Einlaßventils und einer Dauer der offenen Position über 230°.

11. Verfahren nach Anspruch 10, wobei das Verfahren verwendet wird, einen Verbrennungsmotor zu diagnostizieren, der selektiv so gesteuert wird, daß er in einem ersten Modus, in dem das erste niedrigere Nockenprofil (14) im Eingriff stehen sollte, und einem zweiten Modus läuft, in dem das zweite höhere Nockenprofil (15) im Eingriff stehen sollte, wobei der erste Modus ausgewählt wird, wenn der Motor sowohl mit niedriger Last als auch mit niedriger Motordrehzahl läuft, und der zweite Modus ausgewählt wird, wenn der Motor entweder mit hoher Last oder mit hoher Motordrehzahl betrieben wird.

## Revendications

1. Procédé de diagnostic du fonctionnement d'un système de changement de profil de came (12) pour un moteur à combustion interne, comprenant un ensemble de chambres de combustion (3) dont chacune est pourvue d'au moins une soupape d'admission (11), et un mécanisme à cames (17, 14, 15) agissant sur chacune des soupapes d'admission (11), ledit mécanisme à cames (13, 14, 15) ayant au moins deux profils de cames séparés (14, 15) ayant différentes formes et étant commandé de façon à amener en engagement l'un desdits profils de cames (14, 15), de manière sélective, en vue de commander la position de la soupape d'admission (11), ledit procédé comprenant les étapes suivantes :
a) détecter un paramètre du moteur (dP/dϕ, dn/dϕ) ayant un comportement cyclique par rapport à la position angulaire (dϕ) d'un vilebrequin (2b) disposé dans le moteur, et ledit paramètre (dP/dϕ, dn/dϕ) étant une fonction du rendement volumétrique (η) de balayage des cylindres;
b) rassembler un lot d'échantillons (xᵢ) dudit paramètre du moteur (dP/dϕ, dn/dϕ) pendant au moins un cycle moteur (ω) comprenant un temps de combustion pour chaque cylindre (3) dudit ensemble de chambres de combustion;
c) calculer le coefficient pondéral (W(1)) pour une fonction de base trigonométrique F₁ incluant la fonction trigonométrique du 1^{er} ordre (cos(2π/ω)ϕ +jsin(2π/ω)ϕ) du cycle moteur (ω) dans le domaine de l'angle du vilebrequin [ϕ:0-ω],
d) comparer le coefficient pondéral (W(1)) à une valeur de seuil (T₁ᵢ), et parvenir à la conclusion que la position de toutes les soupapes d'admission n'est pas commandée par des profils de cames de même forme, si le coefficient pondéral pour la fonction trigonométrique de base F₁ du premier ordre (cos(2π/ω)ϕ +jsin(2π/ω)ϕ) est supérieur à une valeur seuil,
**caractérisé en ce que**
l'étape c) de calcul du coefficient pondéral (W(1)) pour la fonction de base F₁ inclut l'étape consistant à former le produit de la valeur d'échantillonnage xᵢ et de la valeur de la fonction de base F₁ pour l'angle d'échantillonnage (ϕ) du vilebrequin.

2. Procédé selon la revendication 1,
**caractérisé en ce que**
l'étape c) inclut par ailleurs l'étape de calcul des coefficients pondéraux (W(k)) pour un lot de fonctions de base trigonométriques Fₖ, incluant la fonction trigonométrique du N^{ième} ordre (cosN(2π/ω)ϕ +jsinN(2π/ω)ϕ) du cycle moteur (ω), où N est le nombre de chambres de combustion (3), avec une fréquence correspondant à la fréquence de combustion (ω/N) dans le domaine de l'angle du vilebrequin [ϕ:0-ω], et avec au moins une autre fonction trigonométrique (cosM(2π/ω)ϕ +jsinM(2π/ω)ϕ) d'un ordre inférieur (M:M<N) à celui dudit N^{ième} ordre de fonction trigonométrique, et
l'étape d) de comparaison des coefficients pondéraux (W(k)) inclut les étapes consistant à comparer les coefficients pondéraux (W(k)) pour lesdites fonctions de base Fₖ à des valeurs seuils correspondantes (Tₖ), et à parvenir à la conclusion que la position de toutes les soupapes d'admission (11) n'est pas commandée par des profils de cames (14, 15) de même forme, si les coefficients pondéraux (W(k)) pour les fonctions de base Fₖ d'un ordre quelconque, autre que le N^{ième} ordre (k≠N), sont supérieurs à une valeur seuil (Tₖ), ou si le coefficient pondéral (W(N)) du N^{ième} ordre est inférieur à une valeur seuil (T_{N}).

3. Procédé de diagnostic du fonctionnement d'un système de profils de cames selon les revendications 1 ou 2,
**caractérisé en ce que**
les coefficients pondéraux (W(k)) sont calculés en mettant en oeuvre une transformation de Fourier directe.

4. Procédé de diagnostic du fonctionnement d'un système de profils de cames selon les revendications 1 à 3,
où la commande des mécanismes de cames (17) pour le lot de chambres de combustion est effectuée par deux actionneurs (22, 23), dont chacun est responsable du changement de profil de came pour un groupe de chambres de combustion (3) consistant en une moitié des chambres de combustion dudit ensemble, et
où les chambres de combustion de chaque groupe sont constituées par les chambres de combustion dont les allumages se succèdent de façon séquentielle d'une telle manière que l'allumage pour toutes les chambres de combustion d'un groupe soit achevé avant que l'allumage de l'autre groupe ne commence,
**caractérisé en ce que**
l'on conclut que les soupapes d'admission (11) d'un groupe sont commandées par une came ayant un profil différent de celui des soupapes d'admission (11) de l'autre groupe, si le coefficient pondéral de la fonction de base du premier ordre est supérieur à une valeur seuil.

5. Procédé selon l'une quelconque des revendications 1 à 4,
**caractérisé en ce que**
ladite fonction de base trigonométrique inclut les fonctions trigonométriques ayant les périodes suivantes : ω/X pour tous les dénominateurs X pairs du nombre N de chambres de combustion.

6. Procédé selon l'une quelconque des revendications 1 à 5,
**caractérisé en ce que**
la ou les fréquence(s) des fonctions de base (Fₖ), autres que du N^{ième} ordre, ayant un coefficient pondéral (W(k)) supérieur à une valeur seuil correspondante Tₖ, détermine(nt) le basculement sur un cycle moteur présentant la position relative des soupapes d'admission (11) dont les positions sont commandées par des profils de cames (14, 15) ayant une forme différente de celle des profils de cames (14, 15) commandant les soupapes d'admission restantes.

7. Procédé selon l'une quelconque des revendications 1 à 6,
**caractérisé en ce que**
l'angle de phase ou les angles de phase (Θₖ) des fonctions de base (Fₖ) autres que la fonction de base du N^{ième} ordre, ayant un coefficient pondéral supérieur à une valeur seuil correspondante Tₖ, détermine(nt) les positions actuelles de la séquence d'allumage des soupapes d'admission, dont les positions sont commandées par des profils de cames ayant une forme différente de celle des profils de cames (14, 15) qui commandent les soupapes d'admission restantes.

8. Procédé selon l'une quelconque des revendications précédentes,
**caractérisé en ce que**
ledit paramètre moteur est constitué par la dérivée (dP/dϕ), par rapport à l'angle du vilebrequin, d'une pression P du collecteur d'admission.

9. Procédé selon la revendication 8,
**caractérisé en ce que**
une pression P relativement élevée du collecteur d'admission correspond à un profil de came qui produit un rendement volumétrique inférieur, et une pression P relativement basse du collecteur d'admission correspond à un profil de came qui produit un rendement volumétrique supérieur.

10. Procédé selon la revendication 9,
**caractérisé en ce que**
le mécanisme de cames comprend un premier profil de came plus bas (14) ayant une hauteur dépassant de moins de 4 mm la position fermée de la soupape d'admission, et une durée de maintien de la position ouverte de moins de 200°, et un deuxième profil de came plus haut (15) ayant une hauteur dépassant de plus de 8 mm la position fermée de la soupape d'admission, et une durée de maintien de la position ouverte de plus de 230°.

11. Procédé selon la revendication 10,
qui est utilisé pour diagnostiquer un moteur à combustion interne qui est commandé de façon sélective pour fonctionner dans un premier mode, dans lequel ledit premier profil de came plus bas (14) doit être amené en engagement, et un deuxième mode, dans lequel ledit deuxième profil plus haut (15) doit être amené en engagement,
dans lequel ledit premier mode est sélectionné lorsque le moteur fonctionne à la fois à faible charge et à faible vitesse du moteur, et ledit deuxième mode est sélectionné lorsque le moteur fonctionne soit sous une forte charge, soit à haute vitesse du moteur.
